# EUROPEAN PATENT SPECIFICATION

(11) **EP 2 978 165 B1**
(45) Date of publication and mention of the grant of the patent: **21.02.2018**
(21) Application number: 15176092.3
(22) Date of filing: 09.07.2015
(51) Int. Cl.: H04L 12/28, G08C 17/00

(54) **HOME CONTROL SYSTEM FOR A VEHICLE**
HAUSSTEUERUNGSSYSTEM FÜR EIN FAHRZEUG
SYSTÈME DE COMMANDE DOMESTIQUE D'UN VÉHICULE

(30) Priority: 17.07.2014 US 201414333633
(43) Date of publication of application: 27.01.2016
(73) Proprietor: Toyota Motor Engineering & Manufacturing North America, Inc., Erlanger, KY 41018 (US); Toyota Motor Sales, U.S.A., Inc., Torrance, CA 90509 (US)
(72) Inventor: JIANG, Yifan, Erlanger, KY Kentucky 41018 (US); GUNARATNE, Pujitha, Erlanger, KY Kentucky 41018 (US); SCHULZ, Jason A., Torrance, CA California 90509 (US)
(74) Representative: D Young & Co LLP

(56) References cited:
- WO-A2-2014/107513
- US-A1- 2003 197 594
- US-A1- 2009 315 751
- US-A1- 2010 289 643
- US-A1- 2013 249 688
- US-B1- 8 577 392

## Description

### BACKGROUND

The present disclosure relates to a vehicle, and more particularly to a home control system therefor.
Various conventional home automation systems that automatically control home appliances are available, such as climate control systems, lighting systems, security systems, and sprinkler systems. Automatic control of home appliances in such home automation systems typically involve transitioning such appliances between a powered and unpowered state, between a fully powered state and power-conserving state, or between an active and inactive state. Although effective, such automatic control of home appliances may be relatively restricted in operation. US2003/0197594 relates to a system and method for wireless control of home electronic systems based on location. US2009/0315751 relates to an adaptive vehicle system for controlling a radio frequency receiver/control unit(s). US 2010/289643 relates to remote device control and energy monitoring. US 8 577 392 B1 relates to a system and method of determining the location of wireless communication devices/persons for controlling/adjusting the operation of devices based on the location.

### SUMMARY

The home control system from a vehicle described herein can be used to control home systems based on a distance relationship between the vehicle and the home. The home control system is also operable to associate a distance with a time to achieve a desired change of state in a home system. The home control system thereby provides a method of home control from a vehicle that operates automatically to increase home safety and convenience. The present invention is defined in the appended independent claim to which reference should be made. Advantageous features are set out in the appended dependent claims.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
Figure 1 is a schematic view of a vehicle for use with a home control system; Figure 2 is a schematic view of the home control system relationship with a home;
Figure 3 is a flow chart illustrating operations of the home control system according to one disclosed non-limiting embodiment; and
Figure 4 is a schematic view of a vehicle with a home control system according to another disclosed non-limiting embodiment.

### DETAILED DESCRIPTION

A home control system for a vehicle is disclosed. The home control system is operable to control a home system based on a distance relationship between the vehicle and the home. A vehicle positional system such as a GPS system may be utilized to determine the distance relationship. The distance relationship may alternatively or additionally be determined via a visual system to control a home system such as a garage door. The distance relationship can also be associated with a time to achieve a desired change of state in a home system such as home climate control system to achieve a desired temperature when the vehicle arrives at the home.

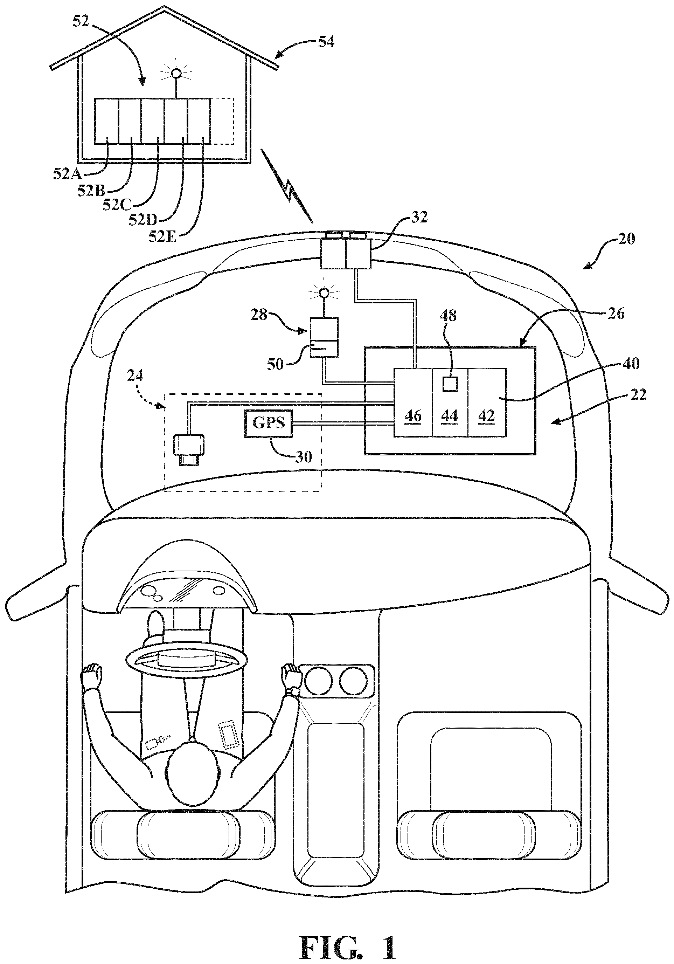

Figure 1 schematically illustrates a vehicle 20 with a home control system 22. The home control system 22 generally includes a sensor system 24, a control system 26 and a communication system 28. It should be appreciated that although particular systems are separately defined, each or any of the systems may be otherwise combined or segregated via hardware and/or software of the home control system 22.

The sensor system 24 may include various sensors operable to identify a condition associated with the vehicle 20. In one disclosed non-limiting embodiment, a vehicle positional system 30 such as a GPS, NFC, Bluetooth, etc. is provided.

The control system 26 generally includes a control module 40 with a processor 42, a memory 44, and an interface 46. The control module 40 may be a portion of a central vehicle control, a stand-alone unit, or other system such as a cloud-based system. The processor 42 may be any type of microprocessor having desired performance characteristics. The memory 44 may include any type of computer readable medium that stores the data and control algorithms 48 described below. Other operational software for the processor 42 may also be stored in the memory 44. The interface 46 facilitates communication with other systems such as the sensor system 24, and the communication system 28.

The communication system 28 includes a wireless communication system 50 operable to communicate with a home system 52 of a home 54 associated with the vehicle 20. It should be appreciated that various network interfaces, e.g., a wireless LAN (Wi-Fi) interface, cellular network interface or other interface may be provided within the home 54 to control the one or more home systems 52. The home system 52 may include, but not be limited to, a climate control system 52A, a security system 52B, a lighting system 52C, a garage door 52D, a home appliance 52E, etc. It should be appreciated that numerous such home systems 52 may be controlled either separately or in combination.

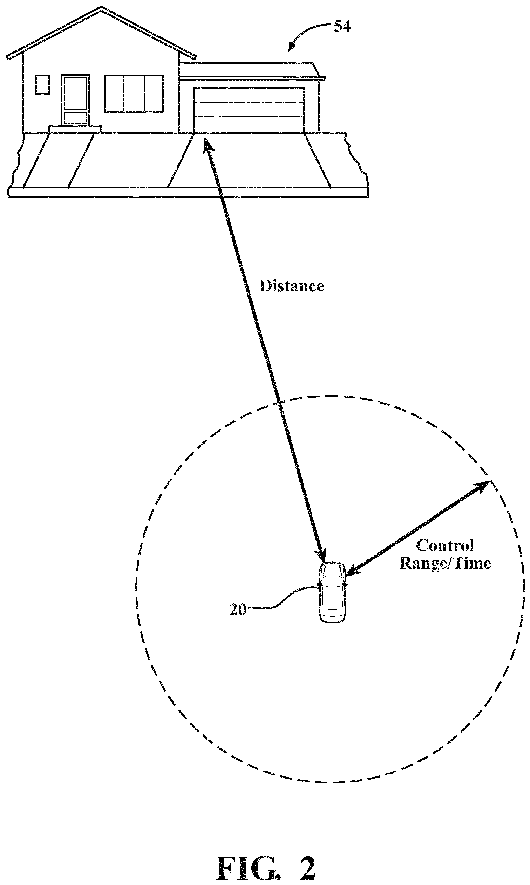

The vehicle positional system 30 includes data associated with the location of the home 54 such that the control system 26 is operable to determine a distance between the vehicle 20 and the home 54 (Figure 2). The location of the home 54 may be stored or otherwise programmed in the memory 44 such that the control system 26 is operable to continuously calculate a relative distance to the home system 52.

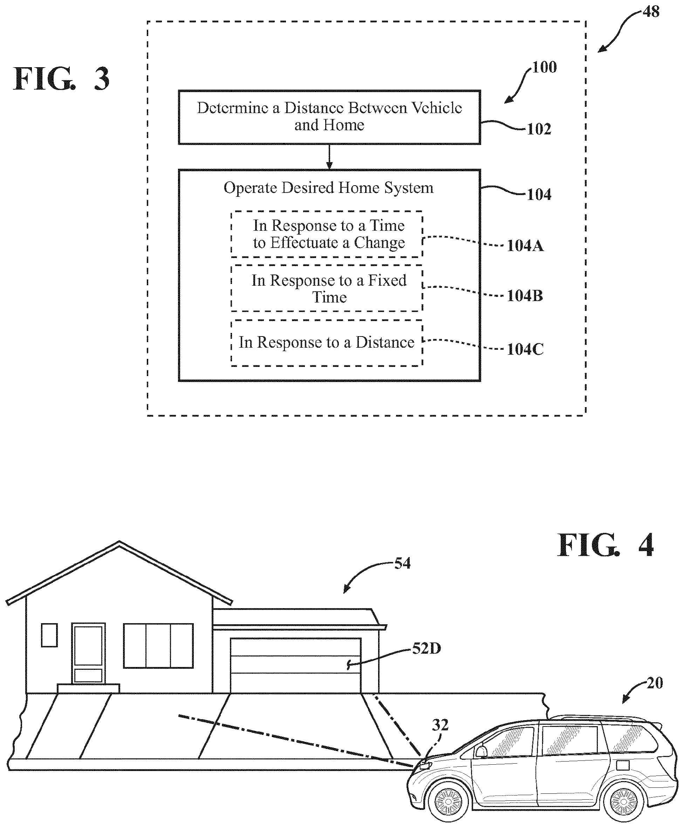

With reference to Figure 3, in one disclosed non-limiting embodiment, an algorithm 48 for operation of the home control system 22 is schematically illustrated. The functions of the algorithm 48 are disclosed in terms of functional block diagrams and it should be understood that these functions may be enacted in either dedicated hardware circuitry or programmed software routines as a computer readable storage medium capable of execution as instructions in a microprocessor based electronics control embodiment such as the processor 42 of the control system 26.

The algorithm 48 provides a method 100 for home system control of the home system 54. Initially, the method 100 determines a distance between the vehicle 20 and a home 54 (step 102; Figure 2). In response to identification of the distance and a control distance, the control module 40 utilizes the communication system 28 to selectively control the desired home system 52 (step 104).

For example, in reference to the climate control system 52A, the home control system 22 determines a temperature difference between a current home temperature and a desired temperature to actuate the climate control system 52A when the vehicle is at a particular control distance from the home system 52 such that the climate control system 52A achieves the desired temperature when the vehicle 20 arrives at the home 54. That is, the control distance is associated with a time required to effect the desired temperature change (step 104A).

In another disclosed non-limiting embodiment, the control module 40 utilizes the communication system 28 to control the desired home system when the estimated time of arrival of the vehicle to the home 54 is of a fixed value such as 30 minutes (step 104B).

In still another disclosed non-limiting embodiment, the home control system 22 determines a status of the home system 52 and selectively switches the home system 52 in response to a fixed distance from the home 54 (step 104C). That is, the range or time is fixed such that once the vehicle 20 is within such a control range, the home system 52 is operated. For example, if the vehicle 20 is out of a driveway of the home, the home control system 22 turns off the lighting system 52C, particular home appliances 52E such as a stove, arms the security system 52B, closes the garage door 52D, and/or switches other such home systems to a desired state. It should be appreciated that any number or combination of such home systems 52 may be controlled.

With reference to Figure 4, in another disclosed non-limiting embodiment, the sensor system 24 includes a camera system 32 such that the home control system 22, for example, is operable to control the home garage door 52D when the home 54 enters into or leaves the view of the camera system 32. Examples of the camera system 32 include, but are not limited to, charge coupled devices, forward looking infrared, thermal systems and combinations thereof. It should be appreciated that the visual control may additionally be combined with distance control to assure proper operation thereof.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A method of controlling a home climate control system using a home control system (22) located in a vehicle (20), the home control system (22) including a control system (26) with a control module (40) provided as part of a central vehicle control disposed in the vehicle (20), the method comprising:
determining, using a processor (42) of the control module (40) of the home control system (22) of the vehicle, a time required to effect changing of a current temperature of a home (54) to a desired temperature of the home (54) using a home climate control system (52A);
defining, using a processor (42) of the control module (40) of the home control system (22) of the vehicle, a control distance as a distance the vehicle (20) can travel within the time required for effecting the temperature change;
determining, using a processor (42) of the control module (40) of the home control system (22) of the vehicle, a relative distance between the vehicle (20) and the home (54) ; and
controlling, using a wireless communication system (50) of the home control system (22) of the vehicle (20), the home climate control system (52A) when the relative distance is equal to the control distance, such that the home climate control system (52A) achieves the desired temperature when the vehicle (20) arrives at the home (54).

2. The method as recited in claim 1, wherein the relative distance between the vehicle (20) and the home (54) is determined via a GPS (30).

3. The method as recited in claim 1, wherein the relative distance between the vehicle (20) and the home (54) is determined via a camera system (32).

## Patentansprüche

1. Verfahren zum Steuern eines Hausklimaregelungssystems unter Verwendung eines sich in einem Fahrzeug (20) befindlichen Haussteuersystems (22), wobei das Haussteuersystem (22) ein Steuersystem (26) mit einem Steuermodul (40), das als Teil einer im Fahrzeug (20) angeordneten zentralen Fahrzeugsteuerung bereitgestellt ist, beinhaltet, wobei das Verfahren Folgendes umfasst:
Bestimmen, unter Verwendung eines Prozessors (42) des Steuermoduls (40) des Haussteuersystems (22) des Fahrzeugs, einer Zeit, die zum Bewirken einer Änderung einer gegenwärtigen Temperatur eines Hauses (54) zu einer gewünschten Temperatur des Hauses (54) unter Verwendung eines Hausklimaregelungssystems (52A) benötigt wird;
Definieren, unter Verwendung eines Prozessors (42) des Steuermoduls (40) des Haussteuersystems (22) des Fahrzeugs, eines Steuerabstands als einen Abstand, den das Fahrzeug (20) innerhalb der Zeit, die zum Bewirken der Temperaturänderung benötigt wird, fahren kann;
Bestimmen, unter Verwendung eines Prozessors (42) des Steuermoduls (40) des Haussteuersystems (22) des Fahrzeugs, eines relativen Abstands zwischen dem Fahrzeug (20) und dem Haus (54) und
Steuern, unter Verwendung eines Drahtloskommunikationssystems (50) des Haussteuersystems (22) des Fahrzeugs (20), des Hausklimaregelungssystems (52A), wenn der relative Abstand gleich dem Steuerabstand ist, so dass das Hausklimaregelungssystem (52A) die gewünschte Temperatur erreicht, wenn das Fahrzeug (20) am Haus (54) ankommt.

2. Verfahren nach Anspruch 1, wobei der relative Abstand zwischen dem Fahrzeug (20) und dem Haus (54) über ein GPS (30) bestimmt wird.

3. Verfahren nach Anspruch 1, wobei der relative Abstand zwischen dem Fahrzeug (20) und dem Haus (54) über ein Kamerasystem (32) bestimmt wird.

## Revendications

1. Procédé de commande d'un système de régulation de conditions ambiantes de domicile utilisant un système de commande de domicile (22) situé dans un véhicule (20), le système de commande de domicile (22) comprenant un système de commande (26) avec un module de commande (40) réalisé en tant que partie d'un dispositif de commande de véhicule central disposé dans le véhicule (20), le procédé comprenant :
déterminer, au moyen d'un processeur (42) du module de commande (40) du système de commande de domicile (22) du véhicule, un temps requis pour mettre en oeuvre un changement de sorte qu'une température actuelle d'un domicile (54) passe à une température souhaitée du domicile (54) au moyen d'un système de régulation de conditions ambiantes de domicile (52A) ;
définir, au moyen du processeur (42) du module de commande (40) du système de commande de domicile (22) du véhicule, une distance de commande comme une distance que le véhicule (20) peut parcourir dans le temps requis pour mettre en oeuvre le changement de température ;
déterminer, au moyen du processeur (42) du module de commande (40) du système de commande de domicile (22) du véhicule, une distance relative entre le véhicule (20) et le domicile (54) ; et
commander, au moyen d'un système de communication sans fil (50) du système de commande de domicile (22) du véhicule (20), le système de régulation de conditions ambiantes de domicile (52A) lorsque la distance relative est égale à la distance de commande, de telle sorte que le système de régulation de conditions ambiantes de domicile (52A) parvienne à établir la température souhaitée lorsque le véhicule (20) arrive au domicile (54).

2. Procédé selon la revendication 1, dans lequel la distance relative entre le véhicule (20) et le domicile (54) est déterminée par le biais d'un GPS (30) .

3. Procédé selon la revendication 1, dans lequel la distance relative entre le véhicule (20) et le domicile (54) est déterminée par le biais d'un système de caméra (32).
